# EUROPEAN PATENT APPLICATION

(11) **EP 4 064 505 A1**
(43) Date of publication of application: **28.09.2022**
(21) Application number: 20911198.8
(22) Date of filing: 16.12.2020
(51) Int. Cl.: H02J 7/00

(54) **TERMINAL DEVICE**

(30) Priority: 31.12.2019 CN 201911421138
(71) Applicant: GUANGDONG OPPO MOBILE TELECOMMUNICATIONS CORP., LTD., Dongguan, Guangdong 523860 (CN)
(72) Inventor: QU, Chunying, Dongguan, Guangdong 523860 (CN)
(74) Representative: Ipside
(86) International application number: PCT/CN2020/136907
(87) International publication number: WO 2021/135949

(57) **Abstract**

A terminal device (100). The terminal device (100) comprises a first circuit board (1) and a rechargeable battery (2); the first circuit board (1) is provided with a charging interface (11) and a battery protection circuit (12); and the rechargeable battery (2) is connected to the battery protection circuit (12).

## Description

### CROSS REFERENCE

This application claims foreign priority to Chinese Patent Application No. 201911421138.8, filed on December 31, 2019, the entire contents of which are herein incorporated by reference in their entireties.

### TECHNICAL FIELD

The present disclosure relates to the technical field of terminals, and in particular to a terminal device.

### BACKGROUND

When some terminal devices in the related art are charged, a current flows from a charging interface and firstly reaches a sub-board, then is transmitted from the sub-board to a main board through a flexible circuit board, and then is transmitted from the main board to a rechargeable battery through another flexible circuit board, which results in a longer charging path. Since a path of the current flowing through is longer and a current flow is larger, it is easy to cause current loss when a charging power of the terminal devices is increased, such that a heating amount of the terminal devices is increased and a charging efficiency is reduced during charging. At the same time, it is also possible to burn the terminal devices, and even cause safety accidents, resulting in many dangers, such as an outbreak of a fire of the terminal devices, explosion of the rechargeable battery, and the like.

### SUMMARY OF THE DISCLOSUR

An object of the embodiments of the present disclosure is to solve at least one of the technical problems existing in the related art, and a terminal device is provided. The terminal device has advantages of a short charging path, a low heat amount, a high safety, and so on.

The terminal device according to the present disclosure includes a first circuit board, including a charging interface and a battery protection circuit; and a rechargeable battery connected to the battery protection circuit.

In the terminal device according to the present disclosure, the battery protection circuit is integrated on the first circuit board having the charging interface arranged thereon, such that the rechargeable battery is no longer provided with a separate battery protection board, thereby reducing greatly the impedance of the path from the charging interface to the rechargeable battery. When fast charged with a high power and heavy current, heating of the path can be greatly increased, thus improving an increasing temperature rise performance and the charging safety of the terminal device.

Additional aspects and advantages of the present disclosure will be given in part in the following description, and some will become apparent from the following description, or learned through the practice of the present disclosure.

### BRIEF DESCRIPTION OF THE DRAWINGS

FIG. 1 is a schematic view of a terminal device according to one embodiment of the present disclosure.
FIG. 2 is a schematic view of the terminal device according to one embodiment of the present disclosure.
FIG. 3 is a schematic view of the terminal device according to one embodiment of the present disclosure.
FIG. 4 is a schematic view of the terminal device according to one embodiment of the present disclosure.
FIG. 5 is a schematic view of the terminal device according to one embodiment of the present disclosure.

List of reference signs in drawings:
terminal device 100;
first circuit board 1; charging interface 11; battery protection circuit 12; charging control circuit 13;
rechargeable battery 2; cell 20; positive tab 201; negative tab 202;
first cell 21; second cell 22; third cell 23; conductive metal 24;
second circuit board 3; radiofrequency processing circuit 31; baseband processing circuit 32; application processor circuit 33;
flexible circuit board 4; hard circuit board 5.

### DETAILED DESCRIPTION

Embodiments of the present disclosure will be described in detail below, and examples of the embodiments will be illustrated in the accompanying drawings. Same or similar reference numbers refer to same or similar elements or elements having same or similar functions throughout. The embodiments described below with reference to the drawings are illustrative and are intended to explain the present disclosure, and cannot be construed as a limitation to the present disclosure.

Many different embodiments or examples are provided in the present disclosure as follows, so as to implement different structures of the present disclosure. In order to simplify the present disclosure, components and arrangements of specific examples are described as follows. Of course, they are only examples and are not intended to limit the present disclosure. Furthermore, the present disclosure may repeat reference numbers and/or letters in different embodiments. This repetition is for the purpose of simplicity and clarity, and does not indicate a relationship between the different embodiments and/or arrangements discussed. In addition, examples of various specific processes and materials are provided by the present disclosure, however, it would be appreciated by one skilled in the art that other processes and/or other materials may be applicable or used.

When some terminal devices in the related art are charged, a current flows from a charging interface and firstly reaches a sub-board, then is transmitted from the sub-board to a main board through a flexible circuit board, and then is transmitted from the main board to a rechargeable battery through another flexible circuit board, resulting in a longer charging path. Since a path of the current flowing through is longer and a current flow is larger, it is easy to cause a current loss when a charging power of the terminal devices is increased, such as using a fast charging process by increasing the currents, such that a heating amount of the terminal devices is increased and a charging efficiency is reduced during charging. At the same time, a battery protection board is seriously vulnerable due to heating, and it is also possible to burn the terminal devices, and even cause safety accidents, resulting in many dangers, such as, an outbreak of a fire of the terminal devices, explosion of the rechargeable battery, and the like.

In order to solve the above technical problems, technical solutions are provided in the related art that an impedance of a path between various components may be reduced as much as possible by means of, for example, increasing an area of the charging interface, widening two flexible circuit boards, widening wirings of a main board, increasing an interface area of a rechargeable battery connector, and the like. However, these means can only improve a heat-dissipation performance during charging to a very small extent. Therefore, in order to further effectively improve the heat-dissipation performance, a terminal device 100 is provided in some embodiments of the present disclosure.

Hereinafter, with reference to the accompanying drawings, the terminal device 100 according to some embodiments of the present disclosure will be described. It should be noted that a type of the terminal device 100 according to some embodiments of the present disclosure is not limited, and the terminal device 10 may be a device having the rechargeable battery installed therein and chargeable by the current obtained from the outside, such as a mobile phone, a tablet, a computing device, an information display device, or the like.

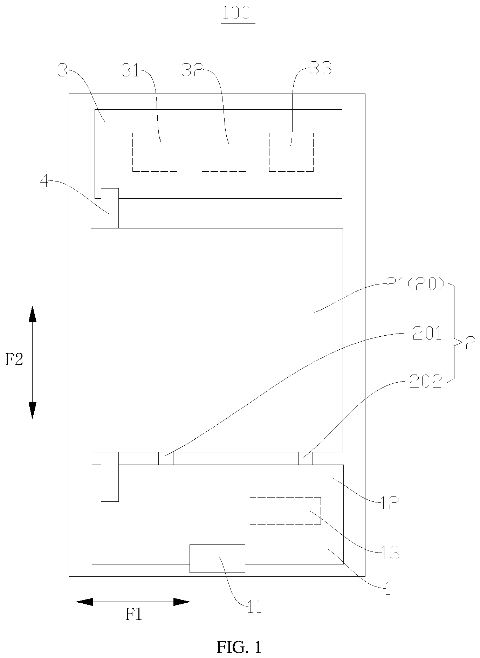

As shown in FIG. 1, the terminal device 10 may include a first circuit board 1 and a rechargeable battery 2. A charging interface 11 and a battery protection circuit 12 are arranged on the first circuit board 1. The rechargeable battery 2 is connected to the battery protection circuit 12. That is, the charging interface 11 and the battery protection circuit 12 are integrated on the same circuit board, namely, the first circuit board 1, such that when the charging interface 11 is connected to a power source, such as a fixed power source or a mobile power source, the current may directly flow from the first circuit board 1 to the rechargeable battery 2, thereby effectively shortening a current transmission path, reducing the current loss, reducing the heating amount of the terminal device 100 during charging, improving the charging efficiency of the terminal device 100, reducing a risk of burning the terminal device 100, reducing hidden dangers of the safety accidents, and improving a charging safety of the terminal device 100.

In short, in the terminal device 100 according to some embodiments of the present disclosure, the battery protection circuit 12 is integrated on the first circuit board 1 having the charging interface 11 arranged thereon, such that the rechargeable battery 2 is no longer provided with a separate battery protection board, thereby reducing greatly the impedance of the path from the charging interface 11 to the rechargeable battery 2. During a fast charging process of the terminal device 100 with a high power and a heavy current, heating of the path may be greatly reduced, thus improving an increasing temperature-rise performance and the charging safety of the terminal device 100.

In addition, it should be noted that a specific type of the charging interface 11 according to some embodiments is not limited, for example, the charging interface 11 may be, but is not limited to, at least one of a Mini USB interface, a Micro USB interface, a Type-C interface, and a Lighting interface. Moreover, it would be appreciated that, for the terminal device 100, functions and concepts of the battery protection circuit 12 is well known to one skilled in the art. That is, it is mainly configured to protect the rechargeable battery, generally referred to as a lithium battery, and reduce the occurrence of safety problems, such as overcharge, over discharge, overcurrent, short circuiting, charging and discharging at super-high temperature, and so on.

In some embodiments of the present disclosure, the rechargeable battery 2 includes one or more cells 20. Each of the cells 20 includes a positive tab 201 and a negative tab 202. At least one positive tab 201 and at least one negative tab 202 of the rechargeable battery 2 are disposed on a side of the rechargeable battery 2 close to or adjacent to the first circuit board 1, and connected to the battery protection circuit 12, such as by directly welding. In other words, at least one positive tab 201 of all the positive tabs 201 and at least one negative tab 202 of all the negative tabs 202 included in the rechargeable battery 2 are arranged close to the first circuit board 1.

Therefore, the positive tab 201 and the negative tab 202 connected to the battery protection circuit 12, such as by directly welding, are arranged on the side of the rechargeable battery 2 close to the first circuit board 1, such that a length of the positive tab 201 connected to the battery protection circuit 12 (such as by directly welding) and a length of the negative tab 202 connected to the battery protection circuit 12 (such as by directly welding) are shortened, thereby further shortening the current transmission path, reducing the current loss, reducing the heating amount of the terminal device 100 during charging, improving the charging efficiency of the terminal device 100, reducing the risk of burning the terminal device 100, reducing hidden dangers of the safety accidents, and improving the charging safety of the terminal device 100. Moreover, the positive tab 201 and the negative tab 202 are connected to the battery protection circuit 12, such as by directly welding, thereby effectively reducing connection difficulty and improving a reliability of the current transmission.

It should be noted that a tab is arranged on the side of the rechargeable battery 2 close to the first circuit board 1, which means that the rechargeable battery 2 includes a preset surface facing the first circuit board 1, and the tab is drawn from the preset surface in a direction facing the first circuit board 1. For example, in the embodiment as shown in FIG. 1, when the first circuit board 1 is located under the rechargeable battery 2, all the positive tabs 201 and all the negative tabs 202 are drawn downwards from a bottom end of the rechargeable battery 2, such that all the positive tabs 201 and all the negative tabs 202 are disposed on the side of the rechargeable battery 2 close to the first circuit board 1.

In some embodiments, as shown in FIG. 1, the rechargeable battery 2 includes a first cell 21. Each of the one or more first cells 21 includes a positive tab 201 and a negative tab 202. The positive tab 201and the negative tab 202 of the first cell 21 are disposed on the side of the rechargeable battery 2 close to the first circuit board 1 and connected to the battery protection circuit 12, such as by directly welding. Therefore, the first cell 21 may be independently connected to the battery protection circuit 12, so as to simplify the structure.

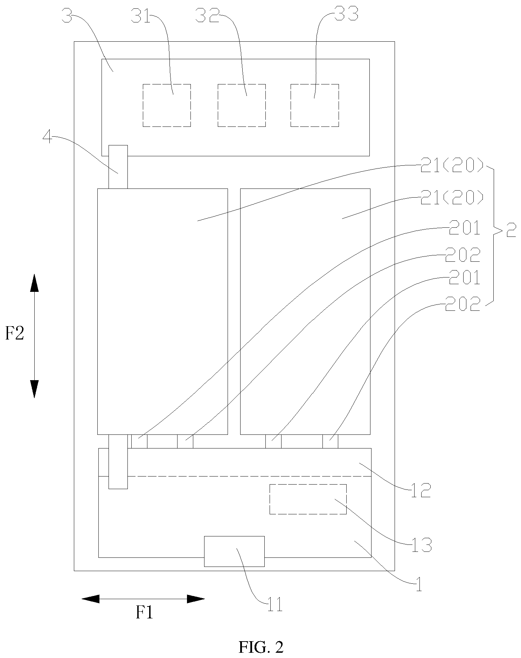

It should be noted that when the rechargeable battery 2 includes the first cell 21, the rechargeable battery 2 may include only one first cell 21 (for example, in the embodiment as shown in FIG. 1), and the rechargeable battery 2 may also include a plurality of the first cells 21. For example, in the embodiment as shown in FIG. 2, the rechargeable battery 2 may include a plurality of the first cells 21 arranged in parallel with each other. The positive tab 201 and the negative tab 202 of each of the first cells 21 are disposed on the side of the rechargeable battery 2 close to the first circuit board 1 and connected to the battery protection circuit 12, such as by directly welding, and thus a charge capacity of the terminal device 100 is increased, and it is convenient to connect.

In addition, it should be noted that the rechargeable battery 2 may include only one or more first cells 21, but does not include other cells 20, for example, as shown in FIG. 1 and FIG. 2. In other cases, the rechargeable battery 2 may include one or more first cells 21, and at the same time, may include other types of the cells 20 (not shown).

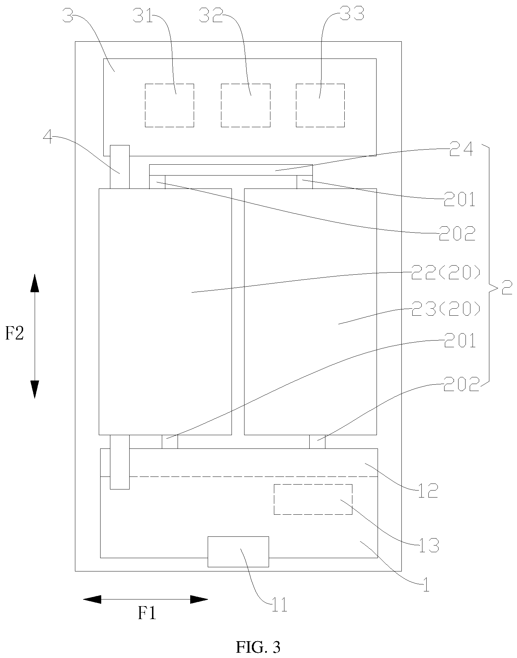

In some embodiments of the present disclosure, as shown in FIG. 3, the rechargeable battery 2 includes a second cell 22 and a third cell 23. The second cell 22 includes a positive tab 201 and a negative tab 202, and the third cell 23 includes a positive tab 201 and a negative tab 202. The positive tab 201 of the second cell 22 and the negative tab 202 of the third cell 23 are disposed on the side of the rechargeable battery 2 close to the first circuit board 1 and connected to the battery protection circuit 12, such as by directly welding. The negative tab 202 of the second cell 22 and the positive tab 201 of the third cell 23 are disposed on a side of the rechargeable battery 2 away from the first circuit board 1 and connected to each other. Therefore, the charge capacity of the terminal device 100 is increased, and it is convenient to connect. It should be noted that the negative tab 202 of the second cell 22 may be directly connected to the positive tab 201 of the third cell 23 through a conductive metal 24, for example, as shown in FIG. 3. Alternatively, the negative tab 202 of the second cell 22 may be indirectly connected to the positive tab 201 of the third cell 23 through the cell 20 (not shown).

In addition, since the positive tab 201 and the negative tab 202 of the second cell 22 are respectively disposed on two sides of the rechargeable battery 2, a possibility of a problem that the second cell 22 has a relatively large size may be reduced, and the problem is caused by a certain safety distance required by the case that the positive tab 201 and the negative tab 202 are disposed on the same side of the second cell 22. For example, when one of the positive tab 201 and the negative tab 202 of the second cell 22 is disposed on an upper side of the second cell 22, the other of the positive tab 201 and the negative tab 202 of the second cell 22 is disposed on a lower side of the second cell 22, and it is possible to reduce a width of the second cell 22 in a left and right directions. Similarly, since the positive tab 201 and the negative tab 202 of the third cell 23 are respectively disposed on the two sides of the rechargeable battery 2, a possibility of a problem can be reduced, and the problem is caused by a certain safety distance required by the case that the positive tab 201 and the negative tab 202 are disposed on the same side of the second cell 22. For example, when one of the positive tab 201 and the negative tab 202 of the third cell 23 is disposed an upper side of the third cell 23, the other of the positive tab 201 and the negative tab 202 of third cell 23 is disposed on a lower side of the third cell 23, and it is possible to reduce the width of the third cell 23 in the left and right directions.

Therefore, the rechargeable battery 2 may include a larger number of the cells 20, so as to improve a battery life of the terminal device 100. Alternatively, it is possible to save more space in the terminal device 100 without arranging more battery cells 20, such that there is space to arrange more functional elements in the terminal device 100, thereby providing more functions based on ensuring a structure compactness of the terminal device 100.

In the embodiment as shown in FIG. 3, for example, the second cell 22 and the third cell 23 are sequentially arranged along a first direction F1. The positive tab 201 of the second cell 22 and the negative tab 202 of the second cell 22 are respectively arranged on two opposite sides of the second cell 22 in a second direction F2. Furthermore, a distance between an edge of the positive tab 201 of the second cell 22 and an edge of the negative tab 202 of the second cell 22 in the first direction F1 is less than or substantially equal to 3mm, such as 0mm, 1mm, 2mm, or 3mm. The positive tab 201 of the third cell 23 and the negative tab 202 of the third cell 23 are respectively arranged on two opposite sides of the third cell 23 in the second direction F2. Furthermore, a distance between an edge of the positive tab 201 of the third cell 23 and an edge of the negative tab 202 of the third cell 23 in the first direction F1 is less than or substantially equal to 3mm, such as 0mm, 1mm, 2mm, or 3mm.

Therefore, the width of the second cell 22 and the width of the third cell 23 in the first direction F1 may be reduced, such that the number of the cells 20 arranged in a width direction of the cells 20 of the rechargeable battery 2 may be increased, and thus a total charge capacity of the terminal device 100 is effectively improved. It should be noted that the first direction F1 may be a width direction of the terminal device 100, a length direction of the terminal device 100, or the like. It should be noted that the second direction F2 may be substantially perpendicular to the first direction F1, for example, when the first direction F1 is the width direction of the terminal device 100, the second direction F2 may be the length direction of the terminal device 100. However, it is not limited to this embodiment, for example, in other embodiments, the second direction F2 may be substantially parallel to or intersected with the first direction F1, or the like. Moreover, in some embodiments, the first direction F1 and the second direction F2 may be substantially perpendicular to a thickness direction of the rechargeable battery 2. The thickness direction of the rechargeable battery 2 may be a thickness direction of the terminal device 100.

It should be noted that each of the plurality of cells 20 has the same structural shape and size, so as to facilitate unified production and assembly, thereby improving productivity. Of course, the present disclosure is not limited to this embodiment, namely, the structural shapes and sizes of the plurality of cells 20 may also be different from each other, so as to meet different production requirements.

It should be noted that the number of the cells 20 of the rechargeable battery 2 according to the embodiments of the present disclosure is not limited. Further, the number of the cells 20 of the rechargeable battery 2 may be set based on specific situations, for example, the number of the cells 20 of the rechargeable battery 2 may be set according to the three embodiments described as follow, but it is not limited to the following three embodiments. For example, in the embodiment as shown in FIG. 1, the rechargeable battery 2 includes one cell 20, that is, the rechargeable battery 2 may be a single-cell rechargeable battery, and the cell 20 is the first cell 21. Further, in the embodiment as shown in FIG. 2, the rechargeable battery 2 includes two cells 20, that is, the rechargeable battery 2 may be a double-cell rechargeable battery, and the two cells 20 include the two first cells 21. In this case, the two cells may be inversely arranged respectively, such that four tabs are facing downwards and connected to the battery protection circuit 12 located below, such as by directly welding. Further, in the embodiment as shown in FIG. 3, the rechargeable battery 2 includes two cells 20, that is, the rechargeable battery 2 may be the double-cell rechargeable battery, and the two cells 20 include the second cell 22 and the third cell 23. In this case, a tab may be respectively drawn from each of an upper end and a lower end of each cell 20, two tabs disposed on the upper end are connected to each other through the conductive metal 24, and two tabs on the lower end are connected to the battery protection circuit 12 located below the cell 20, such as by directly welding.

In some embodiments, as shown in FIG. 3, the terminal device 100 further includes a second circuit board 3. The second circuit board 3 includes at least one of a radiofrequency processing circuit 31, a baseband processing circuit 32, and an application processor circuit 33. The second circuit board 3 is electrically connected to the first circuit board 1. Therefore, when the rechargeable battery 2 is powering, the rechargeable battery 2 may power the second circuit board 3 by electrically connecting the first circuit board 1 and the second circuit board 3.

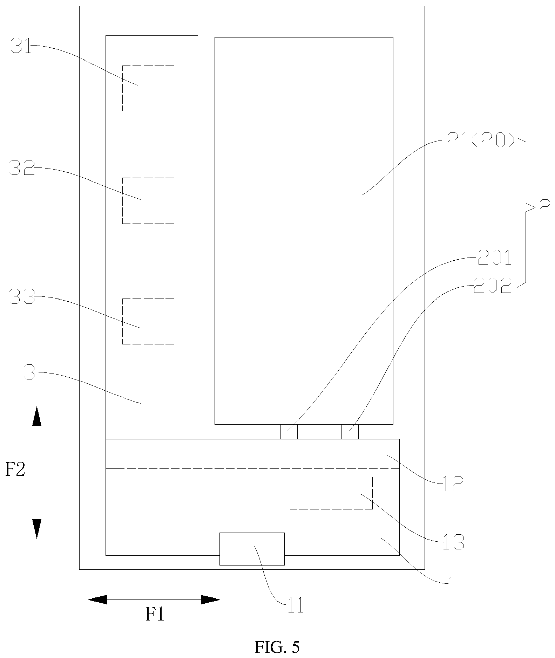

It should be noted that the first circuit board 1 and the second circuit board 3 may respectively have different relative positional relationships with the rechargeable battery 2. However, the second circuit board 3 and the first circuit board 1 may be two circuit boards respectively, for example, as shown in FIGS. 1 to 4. Alternatively, the second circuit board 3 and the first circuit board 1 may be implemented as different parts of the same circuit board, for example, as shown in FIG. 5. When a relative positional relationship between the first circuit board 1 and the second circuit board 3 is determined, the electrical connection manner between the first circuit board 1 and the second circuit board 3 may be specifically selected.

For example, in the embodiment as shown in FIG. 3, the second circuit board 3 and the first circuit board 1 are the two separate circuit boards respectively, and are spaced apart from each other along the second direction F2. The rechargeable battery 2 is arranged between the first circuit board 1 and the second circuit board 3 in the second direction F2. Therefore, a spatial arrangement inside the terminal device 100 may be optimized. In this case, as shown in FIG. 3, the second circuit board 3 is connected to the first circuit board 1 through a flexible circuit board 4, that is, the second circuit board 3 may be powered by connecting the first circuit board 1 and the second circuit board 3 through the flexible circuit board 4. For example, in some embodiments, the flexible circuit board 4 may be arranged on a thickness side of the rechargeable battery 2. That is, the flexible circuit board 4 and the rechargeable battery 2 are stacked along the thickness direction of the rechargeable battery 2, thereby increasing an accommodating space of the rechargeable battery 2, thus a volume and an energy density of the rechargeable battery 2 is increased, and a standby time of the terminal device 100 is increased.

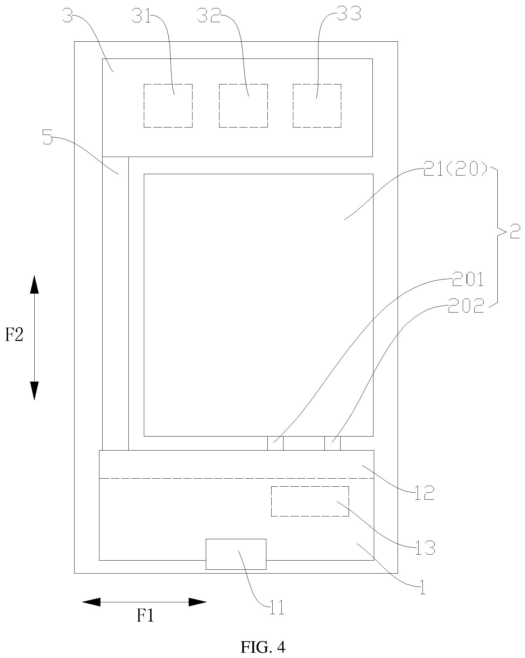

Of course, the present disclosure is not limited to this embodiment. For example, as shown in FIG. 4, when the second circuit board 3 and the first circuit board 1 are spaced apart from each other along the second direction F2 and the rechargeable battery 2 is arranged between the first circuit board 1 and the second circuit board 3 in the second direction F2, the second circuit board 3 may also be connected to the first circuit board 1 through a hard circuit board 5 disposed on a side of the rechargeable battery 2 in the first direction F1, so as to meet different specific requirements.

In addition, in some embodiments of the present disclosure, the second circuit board 3 and the first circuit board 1 may also be the hard circuit board 5. A substrate of the hard circuit board 5 may be but not limited to a FR4. A substrate of the flexible circuit board 4 may be but not limited to a polyimide (PI).

Moreover, in some embodiments of the present disclosure, the first circuit board 1 may include a charging control circuit 13 in addition to the charging interface 11 and the battery protection circuit 12. A concept of the charging control circuit 13 is well known to the one skilled in the art. For example, the charging control circuit 13 may include at least a conversion circuit or a direct charging metal-oxide-semiconductor field-effect (MOS) transistor, and so on. In this way, when charging, a current of the power source, such as the fixed power source or the mobile power source, may enter into the rechargeable battery 2 from the charging interface 11 through the conversion circuit or the direct charging MOS transistor, thereby further shortening the charging path and reducing an overall design difficulty of the terminal device 100.

Of course, the present disclosure is not limited to this embodiment. In other embodiments of the present disclosure, the charging control circuit 13 further includes other elements. The charging control circuit 13 may be arranged on the first circuit board 1, or arranged on the second circuit board 3. Alternatively, a part of the charging control circuit 13 is arranged on the first circuit board 1, and other parts of the charging control circuit 13 are arranged on the second circuit board 3, or the like.

In addition, when a type of the terminal device 100 is determined, other configurations and using manners of the terminal device 100 according to the embodiments of the present disclosure may be known by the one skilled in the art. For example, when the terminal device 100 is a mobile phone, the terminal device 100 may further include a memory, an input unit, a wireless fidelity module, a display unit, a sensor, an audio circuit, a projection unit, a shooting unit, and other members, which will not be repeated here.

In the description of this specification, reference to the terms "one embodiment", "some embodiments", "example", "specific example", "some examples", or the like, means that the specific features, structures, materials or features described in connection with the embodiments or examples are included in at least one embodiment or example of the present disclosure. In this specification, the schematic expression of the above terms does not have to be directed to the same embodiments or examples. Moreover, the specific features, structures, materials or features described may be combined in any one or more embodiments or examples in a suitable manner. In addition, without contradiction, one skilled in the art can combine the different embodiments or examples described in this specification and the features of different embodiments or examples.

The above are only embodiments of the present disclosure and are not intended to limit the scope of the present disclosure. Any equivalent structural changes made under the concept of the present disclosure, using the contents of the specification of the present disclosure and the accompanying drawings, or applied directly/indirectly in other related fields of technology are included in the scope of protection of the present disclosure.

## Claims

1. A terminal device, comprising:
a first circuit board, comprising a charging interface and a battery protection circuit; and
a rechargeable battery, connected to the battery protection circuit.

2. The terminal device according to claim 1, wherein the rechargeable battery comprises one or more cells; each of the one or more cells comprises a positive tab and a negative tab;
at least one of the one or more positive tabs and at least one of the one or more negative tabs of the rechargeable battery are disposed on a side of the rechargeable battery close to the first circuit board, and are connected to the battery protection circuit.

3. The terminal device according to claim 2, wherein the one or more cells comprises a first cell, each of the one or more first cells comprises a positive tab and a negative tab, the positive tab of each of the one or more first cells and the negative tab of each of the one or more first cells are disposed on the side of the rechargeable battery close to the first circuit board, and are connected to the battery protection circuit.

4. The terminal device according to claim 3, wherein the rechargeable battery comprises a plurality of the first cells arranged in parallel with each other.

5. The terminal device according to claim 2, wherein the one or more cells (20) comprises a second cell and a third cell the second cell comprises a positive tab and a negative tab, and the third cell comprises a positive tab and a negative tab; the positive tab of the second cell and the negative tab of the third cell are disposed on the side of the rechargeable battery close to the first circuit board and are connected to the battery protection circuit; and
the negative tab of the second cell and the positive tab of the third cell are disposed on a side of the rechargeable battery away from the first circuit board and are connected to each other.

6. The terminal device according to claim 5, wherein the second cell and the third cell are sequentially arranged along a first direction, a distance between an edge of the positive tab of the second cell and an edge of the negative tab of the second cell in the first direction is less than or equal to 3mm, and a distance between an edge of the positive tab of the third cell and an edge of the negative tab of the third cell in the first direction is less than or equal to 3mm.

7. The terminal device according to any one of claims 1 to 6, wherein the first circuit board further comprises a charging control circuit.

8. The terminal device according to any one of claims 1 to 7, further comprising:
a second circuit board, electrically connected to the first circuit board and comprising at least one of a radiofrequency processing circuit, a baseband processing circuit, and an application processor circuit.

9. The terminal device according to claim 8, wherein the second circuit board and the first circuit board are spaced apart from each other along a second direction, and the rechargeable battery is arranged between the first circuit board and the second circuit board in the second direction.

10. The terminal device according to claim 9, wherein the second circuit board is connected to the first circuit board through a flexible circuit board
